# EUROPEAN PATENT SPECIFICATION

(11) **EP 4 229 786 B1**
(45) Date of publication and mention of the grant of the patent: **13.08.2025**
(21) Application number: 21789646.3
(22) Date of filing: 05.10.2021
(51) Int. Cl.: H04L 1/00, H04L 5/00

(54) **PDCCH-BASED ADAPTATION OF UPLINK ACTIVITY**
PDCCH-BASIERTE ANPASSUNG DER UPLINK-AKTIVITÄT
ADAPTATION BASÉE SUR UN PDCCH D'ACTIVITÉ DE LIAISON MONTANTE

(30) Priority: 16.10.2020 US 202063092627 P
(43) Date of publication of application: 23.08.2023
(73) Proprietor: Nokia Technologies Oy, 02610 Espoo (FI)
(72) Inventor: LAURIDSEN, Mads, 9260 Gistrup (DK); FREDERIKSEN, Frank, 9270 Klarup (DK); KAIKKONEN, Jorma Johannes, 90800 Oulu (FI); HOOLI, Kari Juhani, 90620 Oulu (FI); DALSGAARD, Lars, 90230 Oulu (FI); SCHOBER, Karol, 00440 Helsinki (FI)
(74) Representative: Script Intellectual Property LLP
(86) International application number: PCT/EP2021/077339
(87) International publication number: WO 2022/078804

(56) References cited:
- EP-A1- 3 509 343
- US-A1- 2019 215 897

## Description

### TECHNICAL FIELD

The examples and non-limiting embodiments relate generally to communications and, more particularly, to PDCCH-based adaptation of uplink activity.

EP3509343 discloses methods and apparatus for semi persistent channel state information SP CSI reporting. The reporting may start or stop in response to an activation or deactivation control signal, and the periodicity of the reporting may be indicated in a control signal. Certain reporting instances may be skipped in response to receipt of a skip indicator and/or in response to determining that a measured CSI parameter is below a threshold quantity, invalid and/or not available.

US2019/215897 discloses a method of activating and deactivating channel state information reference signals CSI-RS signalling using MAC control signals. Periodicity of the reporting may be configured in the CSI reporting settings transmitted by the network node.

### BACKGROUND

It is known to implement power saving techniques within a wireless network.

### SUMMARY

The scope of protection sought for various example embodiments is set out by the independent claims. Optional features are set out in the dependent claims.

### BRIEF DESCRIPTION OF THE DRAWINGS

The foregoing aspects and other features are explained in the following description, taken in connection with the accompanying drawings, where:
FIG. 1 is a block diagram of one possible and non-limiting system in which the example embodiments may be practiced.
FIG. 2 is Table 2, which shows triggering/activation of CSI Reporting for possible CSI-RS Configurations (Table 5.2.1.4-1 from TS 38.214).
FIG. 3 illustrates parts of the *CSI-ReportConfig* information element (TS 38.331).
FIG. 4 is an example signaling diagram showing uplink activity adaptation based on a PDCCH DCI trigger.
FIG. 5 is an example signaling diagram showing uplink activity adaptation based on DCI-based switching of reporting periodicity and semi-aperiodic CSI reporting.
FIG. 6 is an example signaling diagram showing uplink activity adaptation based on PDCCH monitoring skipping.
FIG. 7 is an example signaling diagram showing uplink activity adaptation based on search space set switching.
FIG. 8 is an example signaling diagram showing uplink activity adaptation based on PDCCH activity.
FIG. 9 is an example apparatus configured to implement PDCCH-based adaptation of uplink activity.
FIG. 10 shows an example method to implement PDCCH-based adaptation of uplink activity, based on the examples described herein.
FIG. 11 shows another example method to implement PDCCH-based adaptation of uplink activity, based on the examples described herein.

### DETAILED DESCRIPTION OF EXAMPLE EMBODIMENTS

The following acronyms and abbreviations that may be found in the specification and/or the drawing figures are defined as follows:
- 3GPP: third generation partnership project
- 4G: fourth generation
- 5G: fifth generation
- 5GC: 5G core network
- ACK: acknowledgement
- AMF: access and mobility management function
- ASIC: application specific integrated circuit
- BWP: bandwidth part
- C-DRX: connected mode DRX
- CE: control element
- CQI: channel quality information
- CRC: cyclic redundancy check
- C-RNTI: cell RNTI
- CSI: channel state/status information
- CSI-RS: channel state/status information reference signal
- CU: central unit or centralized unit
- DCI: downlink control information
- DCP: DCI with CRC scrambled by PS-RNTI
- DL: downlink
- DRX: discontinuous reception
- DSP: digital signal processor
- DU: distributed unit
- eNB: evolved Node B (e.g., an LTE base station)
- EN-DC: E-UTRA-NR dual connectivity
- en-gNB: node providing NR user plane and control plane protocol terminations towards the UE, and acting as a secondary node in EN-DC
- E-UTRA: evolved universal terrestrial radio access, i.e., the LTE radio access technology
- F1: control interface between CU and DU
- FPGA: field-programmable gate array
- gNB: base station for 5G/NR, i.e., a node providing NR user plane and control plane protocol terminations towards the UE, and connected via the NG interface to the 5GC
- HARQ: hybrid automatic repeat request
- HARQ-ACK: hybrid automatic repeat request ACK
- I/F: interface
- IE: information element
- I/O: input/output
- LMF: location management function
- LTE: long term evolution (4G)
- MAC: medium access control
- MME: mobility management entity
- ng or NG: new generation
- ng-eNB: new generation eNB
- NG-RAN: new generation radio access network
- NR: new radio (5G)
- NR-U: NR unlicensed spectrum
- PDCCH: physical downlink control channel
- PDCP: packet data convergence protocol
- PDSCH: physical downlink shared channel
- PHY: physical layer
- PS-RNTI: power saving-radio network temporary identifier
- PUCCH: physical uplink control channel
- PUSCH: physical uplink shared channel
- RAN: radio access network
- RAN#: RAN WG# or radio layer #
- Rel-: release
- RLC: radio link control
- RNTI: radio network temporary identifier
- RP-: 3GPP RAN
- RRC: radio resource control
- RRH: remote radio head
- RS: reference signal(s)
- RSRP: reference signal received power
- RU: radio unit
- Rx: receiver or interchangeably receive
- SDAP: service data adaptation protocol
- SGW: serving gateway
- SMF: session management function
- SP: semi-persistent
- SP-SS: semi-persistent search space
- SRS: sounding reference signal
- SS: search space
- TR: technical report
- TS: technical specification
- Tx: transmitter or interchangeably transmit
- UE: user equipment (e.g., a wireless, typically mobile device)
- UL: uplink
- UPF: user plane function
- WI: work item
- WID: work item description
- WG: working/work group

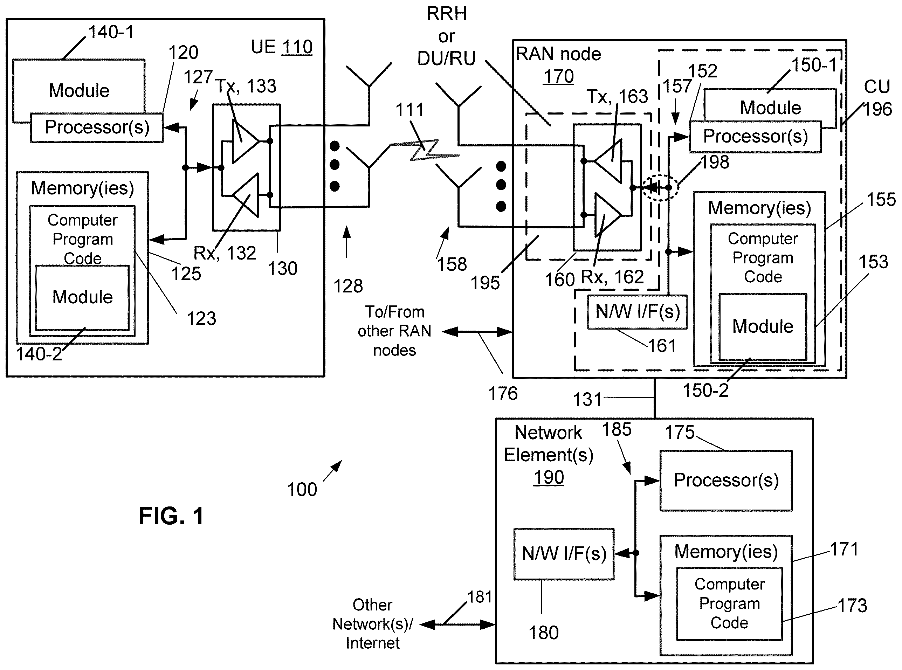

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111. The modules 140-1 and 140-2 may be configured to implement the functionality of the UE as described herein.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that controls the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell is supported by only one gNB-DU 195. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memory(ies) 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195. The modules 150-1 and 150-2 may be configured to implement the functionality of the base station described herein. Such functionality of the base station may include a location management function (LMF) implemented based on functionality of the LMF described herein. Such LMF may also be implemented within the RAN node 170 as a location management component (LMC).

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

It is noted that description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations such as functionality of an LMF as described herein. In some examples, a single LMF could serve a large region covered by hundreds of base stations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

UE 110, RAN node 170 and/or network element(s) 190 (and associated memories, computer program code and modules) may be configured to implement PDCCH-based adaptation of uplink activity, based on the examples described herein. Thus, computer program code 123, module 140-1, module 140-2, and other elements/features shown in FIG. 1 of UE 110 may implement user equipment related aspects of PDCCH-based adaptation of uplink activity as described herein. Similarly, computer program code 153, module 150-1, module 150-2, and other elements/features shown in FIG. 1 of RAN node 170 may implement gNB related aspects of PDCCH-based adaptation of uplink activity as described herein. Similarly, computer program code 173 and other elements/features shown in FIG. 1 of network element(s) 190 may be configured to implement network element related aspects of PDCCH-based adaptation of uplink activity as described herein.

In 3GPP Rel-17 there is a work item targeting NR UE power saving (RP-200938). Objective 2a) of the WID targets power saving within the DRX Active Time:

| | |
|---|---|
| 2) Study and specify, if agreed, enhancements on power saving techniques for connected-mode UE, subject to minimized system performance impact [RAN1, RAN4] | |
| | a) Study and specify, if agreed, extension(s) to Rel-16 DCI-based power saving adaptation during DRX Active Time for an active BWP, including PDCCH monitoring reduction when C-DRX is configured [RAN1] |

According to TS 38.321 the Active Time includes:
- *drx-onDurationTimer* or *drx-InactivityTimer* or *drx-RetransmissionTimerDL* or *drx-RetransmissionTimerUL* or *ra-ContentionResolutionTimer* (as described in clause 5.1.5) is running; or
- a Scheduling Request is sent on PUCCH and is pending (as described in clause 5.4.4); or
- a PDCCH indicating a new transmission addressed to the C-RNTI of the MAC entity has not been received after successful reception of a Random Access Response for the Random Access Preamble not selected by the MAC entity among the contention-based Random Access Preamble (as described in clause 5.1.4).

In 3GPP Rel-16, NR UE power saving was also studied and specified, but as is evident from Technical Report 38.840, the focus was solely on optimizing downlink-related procedures, such as reducing PDCCH monitoring. However, the UE power consumption model, developed as part of the Rel-16 work does define the power consumed for uplink actions. Selected components of the model are provided in Table 1 and as is evident, the power consumed due to uplink activity is on par with or exceeds the PDCCH-only monitoring.

**Table 1: UE power consumption model (TR 38.840)**

| **Power state** | **Relative power per slot** |
|---|---|
| Deep sleep | 1 |
| PDCCH-only | 100 |
| PDCCH+PDSCH | 300 |
| Long PUCCH or PUSCH | 250 (0 dBm), 700 (23 dBm) |
| Short PUCCH | 0.3x long PUCCH |
| SRS | 0.3x long PUCCH |

The problem addressed by the examples described herein is how the UE can adapt uplink activity for UE power saving, based on the ongoing Rel-17 work focused on PDCCH actions.

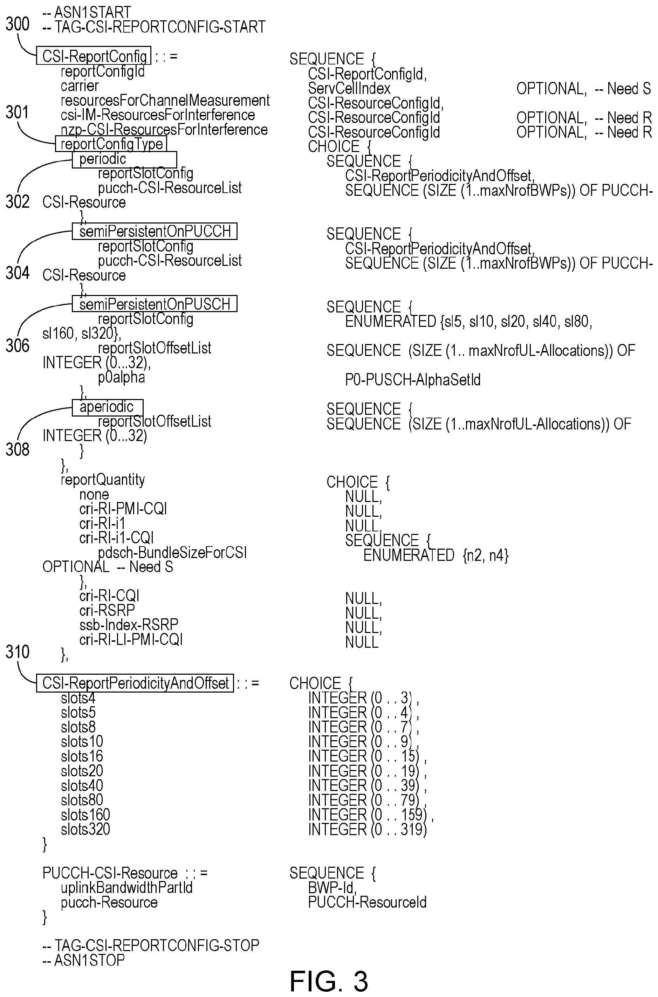

A NR UE can be configured to measure downlink Channel State Information (CSI) Reference Signals (CSI-RS) and report the result(s) to the network. The reporting is based on the CSI-ReportConfig (TS 38.331) - refer to 301 of FIG. 3 and FIG. 3 generally - and contains information on Channel Quality Indicator, rank indicator, precoding matrix indicator, and/or RSRP.

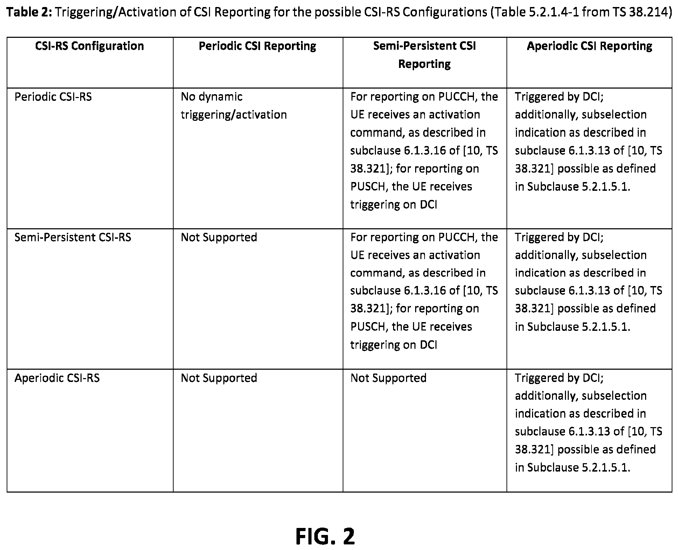

The NR specification supports different kinds of CSI reporting setting combinations for time-domain behavior together with the resource setting and with associated triggering mechanisms, if any. FIG. 2 is Table 2, which shows triggering/activation of CSI Reporting for the possible CSI-RS Configurations (Table 5.2.1.4-1 from TS 38.214). FIG. 3 illustrates parts of the *CSI-ReportConfig* 300 information element (TS 38.331), including the reportConfigType 301 which may be periodic 302, semiPersistentOnPUCCH 304, semiPersistentOnPUSCH 306, or aperiodic 308. FIG. 3 also shows CSI-ReportPeriodicityAndOffset 310. FIG. 2 and FIG. 3 may be leveraged to implement the aspects described herein for adapting uplink activity.

The more dynamic reporting mechanisms are the semi-persistent CSI and aperiodic CSI reporting, which may be activated/triggered with DCI and adjusted with MAC-CE. The semi-persistent CSI reporting on PUCCH (refer e.g. to 304) can be activated/deactivated using the "SP CSI reporting on PUCCH Activation/Deactivation MAC CE", but this ON/OFF effect is prone to UE and gNB ambiguity. Furthermore, the CSI trigger state for the aperiodic CSI (refer e.g. to 308) can be selected using the "Aperiodic CSI Trigger State Subselection MAC CE" (TS 38.321).

In addition to the downlink-based CSI report, the UE may also transmit Sounding Reference Signals (SRS) in uplink enabling CSI estimation at gNB. The SRS is used mainly for uplink scheduling by the network and is configured using the IE SRS-Config in TS 38.331. The SRS may be used by the gNB to facilitate scheduling in downlink as well. Similar to the CSI report, the SRS can be aperiodic, periodic, and semi-persistent. The transmission is configured for a set of resources in the time-frequency domain (with a certain periodicity and offset in time for the periodic and semi-persistent transmissions).

The examples as described herein include adapting UE uplink activity based on downlink signaling related to PDCCH monitoring as part of the Rel-17 work item on UE power saving.

The proposed adaptation method based on PDCCH includes a UE being configured with a periodic PUCCH for reporting CSI and/or SRS with a first periodicity, and a UE determining the UE being allowed to drop one or more configured PUCCH transmissions or SRS transmissions based on the conditions A and B.

Condition A as disclosed herein involves the UE receiving a command to stop or pause (e.g. x ms, where x is a variable) downlink periodic CSI measurements and the related uplink reporting. This may be linked to PDCCH monitoring skipping (another feature being discussed for objective 2a of the UE power saving WI).

Thus, condition A as disclosed herein involves an explicit indication via DCI to pause CSI reporting or SRS transmission. However, condition A as disclosed herein also involves an implicit indication based on a PDCCH monitoring skipping indication. The idea is that the UL reporting/transmission is paused for a duration that is associated to a PDCCH monitoring skipping period. The pause can be equal to the skipping period or a function based on the skipping period and/or other network configuration, e.g. pause min(PDCCH skipping period, x) ms where x is provided by the network through other means. Therefore, condition A may be adjusted to be directly linked to the PDCCH monitoring skipping DCI (i.e. implicit signaling), and not necessarily the general scheme of using a specific DCI explicitly indicating to pause CSI reporting/SRS transmission.

Condition B involves the UE determining that a second periodicity is active for reporting. This may involve where one or more of second periodicities, that is, a longer reporting period or a longer sounding reference signal transmission period, may be preconfigured. This may also involve the UE determining that the second periodicity is applicable based on at least one of: (i) when a periodicity comprising an extended or prolonged period is indicated by a DCI, (ii) when n consecutive measured CSI reports (based on first periodicity) are the same, (iii) when the UE does not receive DCI scrambled with C-RNTI for *yₙ* ms, when a first predefined SearchSpace group is active, or when a first predefined minimum K_{0,min} for downlink and/or a K_{2,min} for uplink is active. This may also involve the UE determining that a first periodicity is applicable based on at least one of: (i) when the UE receives DCI scrambled with C-RNTI, (ii) when a second predefined SearchSpace group is active, or (iii) when a second predefined minimum K_{0,min} for downlink and/or a K_{2,min} for uplink is active. A longer channel measurement period may also be configured or preconfigured. In some examples, a periodicity, for example an indicated second periodicity, may comprise a reduction of channel state information reporting, sounding reference signal transmitting, or channel state information measuring (e.g. relative to a previously active periodicity).

As a further embodiment, the UE reports CSI irrespective of the currently used CSI reporting periodicity if the UE would multiplex CSI together with HARQ-ACK according to the default first periodicity.

As a further embodiment, the UE, when using the second periodicity, may continue measuring CSI corresponding to the first periodicity and report the CSI if the prepared CSI report differs from the previous transmitted CSI report. Transmission may use a resource configured for the first periodicity.

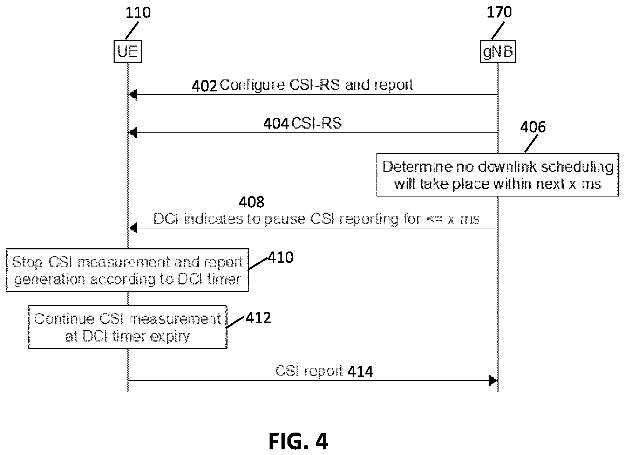

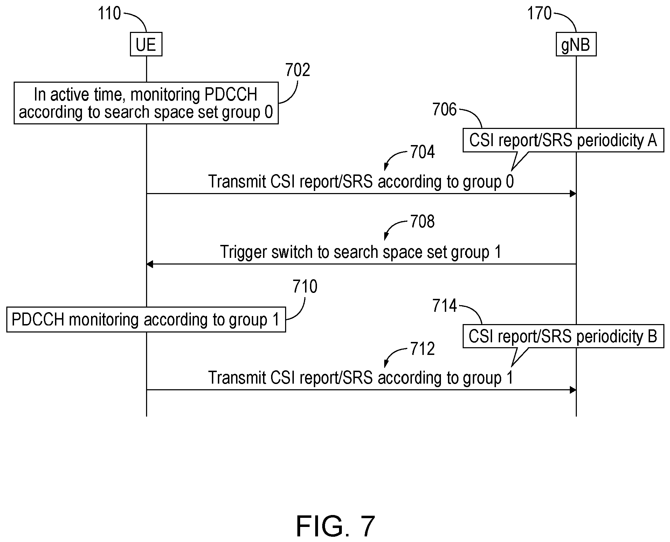

Details are provided herein for the different variants, referring to conditions A and B as described. FIG. 4, FIG. 5, FIG. 6, FIG. 7, and FIG. 8 provide signaling diagrams for the main embodiments of the examples described herein on uplink activity adaptation. The examples demonstrate CSI reporting periodicity adaptation, but are in general also applicable to SRS transmission as for example demonstrated by FIG. 7.

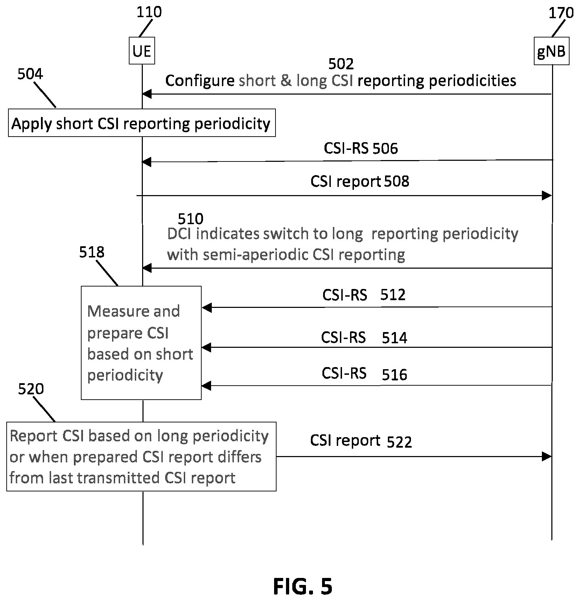

### Explicit indication details as shown by FIG. 4 and FIG. 5.

Regarding condition A (as shown by FIG. 4), at 408 the network e.g. gNB 170 may command the UE 110 to stop or pause (e.g. x ms) downlink periodic CSI measurements and the related uplink reporting. If reporting is paused in slot n, it may be re-started at slot n+[x ms/slot_duration] either a) based on the timeline after the first available RS resource after slot n +[x ms/slot_duration] (so that the UE 110 may need to start measuring CSI-RS after x ms), b) based on the timeline of the first available PUCCH resource after slot n +[x ms/slot_duration] (so that the UE 110 needs to have CSI measured prior the end of the pause timer), or the UE 110 starts CSI reporting at slot n + [x ms/slot_duration] and the content of the report may depend on a UE measurement opportunity. This may be applied when the network is not planning to schedule the UE 110 in downlink, i.e. the network may not make use of the CSI report and thus there is no need for the UE to send it. In one alternative embodiment, the CSI measurement and reporting is re-started if the UE is scheduled while CSI measurement and reporting is stopped/paused. Likewise the network may also inform the UE to stop or pause transmission of sounding reference signals if the network is not planning to schedule the UE in uplink.

Thus, as shown in FIG. 4, at 402 the gNB 170 configures the UE 110 with a CSI-RS and report. At 404, the gNB 170 provides CSI-RS to the UE 110. At 406, the gNB 170 determines that no downlink scheduling is to take place within the next x ms. At 408, the gNB 170 provides to the UE 110 DCI indicating to pause CSI reporting for less than or equal to x ms. At 410, the UE 110 stops CSI measurement and report generation according to the DCI timer. At 412, the UE 110 continues CSI measurement at the expiry of the DCI timer. At 414, the UE 110 transmits the CSI report to the gNB 170.

Regarding condition B (as shown by FIG. 5), the UE 110 may be configured with multiple CSI reporting and/or SRS periodicities (together with corresponding resources and timing offsets), and the DCI indicates the periodicity that the UE applies (see 502). The UE 110 may apply the indicated periodicity for a configured duration (e.g. at 504) before returning to the use of default periodicity. The UE 110 may also switch to the default or shortest periodicity when the UE 110 receives DCI scheduling PDSCH.

In an embodiment, "semi-aperiodic CSI reporting" may be configured and indicated to the UE 110 (e.g. at 510) such that: the UE 110 measures e.g. at 518 the channel at a first indicated periodicity; the UE 110 reports the CSI report e.g. at 522 when it differs from the previously transmitted CSI report. Otherwise the UE 110 reports e.g. at 522 the CSI report according to a second indicated periodicity, where the second periodicity is integer multiple of first periodicity; two CSI reports are regarded to differ if the value(s) of any of the reported CSI components (rank indicator, precoding matrix indicator, etc.) have a different value. Alternatively, two CSI reports are regarded to differ if the value of a predetermined CSI component has a different value. In the case of channel quality information (CQI) or reference signal received power (RSRP), the CSI reports are considered to differ if the CQI or RSRP values differ at least k values, where k is predetermined or configured. The "semi-aperiodic CSI reporting" embodiment may be used when gNB 170 detects or the UE 110 indicates a quasi-stationarity of the channel. This may be used together with network configured UE power saving, e.g. when the UE detects that low mobility conditions are fulfilled.

Further regarding condition B, in an example, configured periodicities are integer multiples of the shortest periodicity. In another example, UL resources are configured corresponding to the shortest periodicity. When the UE 110 applies a longer periodicity, it uses a subset of the configured UL resources according to the used periodicity and the configured offset.

Thus, in the example shown by FIG. 5, at 502 the gNB 170 configures the UE 110 with short and long CSI reporting periodicities. At 504, the UE 110 applies the short CSI reporting periodicity. At 506, the gNB 170 transmits a CSI-RS to the UE 110. At 508, the UE 110 transmits a CSI report 508 to the gNB 170. At 510, the gNB 170 transmits DCI with an indication for the UE 110 to switch to the long reporting periodicity with semi-aperiodic CSI reporting. At 512, 514, and 516, the gNB 170 transmits a CSI-RS to the UE 110. Following either or each of 512, 514, or 516, the UE at 518 measures and prepares CSI (e.g. a CSI report) based on the short periodicity. At 520, the UE 110 determines to report CSI based on the long periodicity, or when the prepared CSI report differs from the last transmitted CSI report. At 522, the UE 110 transmits the CSI report to the gNB 170.

The above adaptation of the periodic UL transmissions (both SRS and UL CSI reports) could be indicated using separate or joint signaling, and the indication would potentially be applied through timed disabling (configured duration as mentioned above, indicated duration from a set of values), or through an explicit indication that the periodic UL transmissions should fall back to a configured baseline operation.

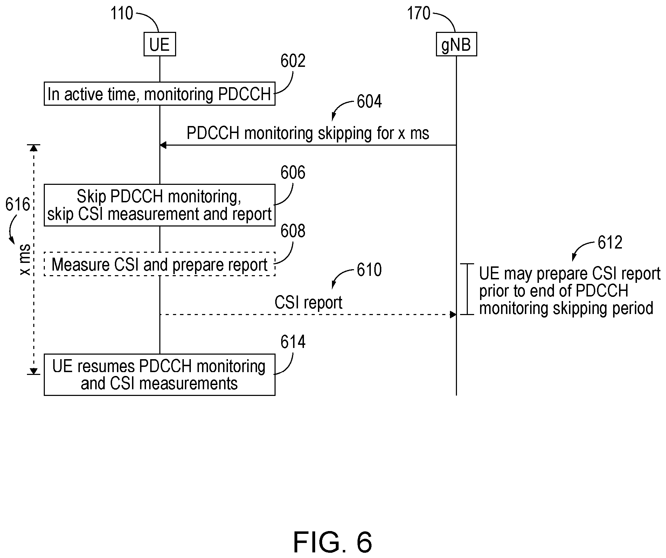

### Implicit indication details as shown by FIG. 6, FIG. 7, and FIG. 8.

Regarding condition A (as shown by the example signaling of FIG. 6), if the UE 110 receives a command at 604 to skip PDCCH monitoring for x ms it may, e.g. at 606, skip the CSI measurements and/or reporting for a similar amount of time. In one embodiment, it may be defined that the UE 110 is able to provide at least one CSI report before the PDCCH monitoring skipping period ends (preferably at the end of the period) - refer collectively to 608, 610, and 612. This ensures that the network has up-to-date CSI prior to the next downlink scheduling opportunity.

Thus, in the example shown by FIG. 6, at 602 the UE 110 monitors PDCCH in active time. At 604, the gNB 170 transmits an indication/command/configuration to the UE 110 for PDCCH monitoring skipping for x ms. At 606, the UE 110 determines to skip PDCCH monitoring, and to skip the CSI measurement and report. Optionally at 608, the UE 110 measures the CSI and prepares a report. Also optionally at 610, the UE 110 transmits the CSI report to the gNB 170. As indicated at 612, the UE may prepare the CSI report prior to the end of the PDCCH monitoring skipping period. The x ms is reflected by 616 of FIG. 6, where x ms amount of time (the PDCCH monitoring skipping period) commences upon receipt of the configuration, command, or indication, etc. at 604 and ends when the UE 110 resumes PDCCH monitoring and CSI measurements at 614. Accordingly, at 614, the UE 110 resumes the PDCCH monitoring and CSI measurements.

Regarding condition B (as shown by the example signaling of FIG. 7), if the UE 110 is configured with different search space set groups, which define PDCCH monitoring periodicity and duration, each set may also contain different uplink activity configurations such as different CSI reporting periodicity and SRS periodicity. Search space set groups and switching between them may be those defined in NR-U for unlicensed operation and considered for licensed band operation.

Thus, FIG. 7 shows an example where the UE 110 is configured with different search space set groups (e.g. search space set group 0 and search space set group 1). At 702, the UE 110 in active time monitors PDCCH according to search space set group 0. At 704, the UE 110 transmits to the gNB 170 a CSI report or SRS according to group 0. As indicated at 706, group 0 corresponds to CSI report(ing) or SRS with periodicity A. At 708, the gNB 170 transmits to the UE 110 a trigger for the UE 110 to switch (e.g. monitoring) to search space set group 1. At 710, therefore, UE 110 performs monitoring of PDCCH according to group 1. At 712, the UE 110 transmits the CSI report or SRS according to group 1. As indicated at 714, group 1 corresponds to CSI report or SRS with periodicity B.

Currently, in NR it is not possible to link the skipping of periodic reporting to activation of uplink or downlink SP-SS, as search space (SS) sets cover both UL and DL. The adaptation methods as herein described do not propose to completely drop UL or DL to control the pausing of CSI reports, but instead toggle the DL and UL monitoring periodicity by changing SS sets. When the SS sets are switched this then implicitly leads to adjusting the CSI reporting periodicity (and/or SRS transmission).

Further regarding condition B, if the UE is configured with a minimum scheduling offset restriction (such as K_{0,min} for downlink, K_{2,min} for uplink), each minimum scheduling offset configuration may also be associated with different uplink activity configurations, for example CSI reporting periodicity or CSI resource periodicity.

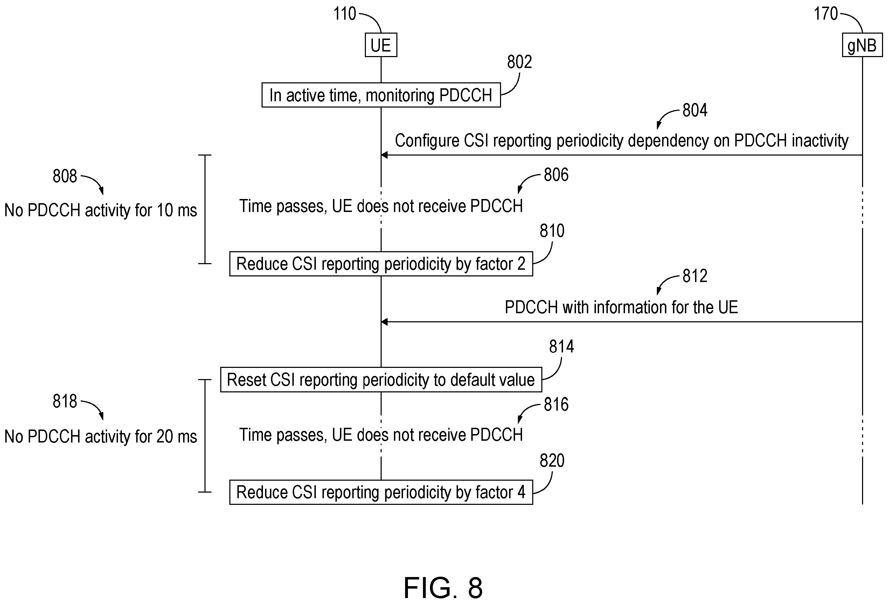

Regarding condition B (as shown by the example signaling within FIG. 8), if the UE 110 does not receive PDCCH (scrambled by C-RNTI) for *yₙ* ms, it reduces CSI reporting periodicity by a factor of m, for example i) after inactivity of 10ms (refer to 808) the UE 110 reduces the CSI reporting periodicity by 2 (refer to 810), ii) after inactivity of 20ms (refer to 818) the UE 110 reduces the CSI reporting periodicity by 4 (refer to 820), or iii) if the UE 110 receives PDCCH (scrambled by C-RNTI), e.g. at 812, the UE 110 at 814 returns to the default CSI reporting periodicity.

Thus, in FIG. 8, at 802, the UE in active time monitors PDCCH. At 804, the gNB 170 configures the UE 110 with a CSI reporting periodicity depending on PDCCH inactivity. At 806, time passes, and the UE 110 does not receive PDCCH. Item 808 illustrates the example where there is no PDCCH activity for 10 ms. After 10 ms, the UE 110 then at 810 reduces CSI reporting periodicity by a factor of 2. At 812, the gNB 170 provides information for the UE 110 over PDCCH and at 814, the UE 110 resets the CSI reporting periodicity to a default value. At 816, time passes, and the UE 110 does not receive PDCCH. Item 818 illustrates the example where there is no PDCCH activity for 20 ms. After 20 ms, the UE 110 then at 820 reduces CSI reporting periodicity by a factor of 4.

An additional condition for dropping CSI or SRS transmission is herein described. As a further embodiment, the UE reports CSI irrespective of the currently used CSI reporting periodicity if the UE would multiplex CSI together with HARQ-ACK according to the default periodicity. If the HARQ feedback delay from the scheduling PDCCH is shorter than the CSI computation time, the UE can report CSI without updating it. This embodiment avoids ambiguity (e.g. in the PUCCH resource) in HARQ-ACK reporting due to one or more discrepancies in the used CSI reporting periodicity between the UE and gNB.

The indication for the temporary change of UL activity periodicity (or explicitly turning off activity) could be carried on the DCP (DCI with CRC scrambled with PS-RNTI) read by the UE outside of active time, where the UE would be configured with specific bit fields in the message to indicate the specific UE operation (e.g. changing/adapting SRS and/or CSI measurement/reporting). Alternatively, the indication could be provided through the normal scheduling DCI with an extension to include the related information. In one embodiment of the examples described herein, a UE is configured to utilize the special bits in the DCI format 0_2 to provide such adaptation information as part of the information content in the configurable bit fields for the SRS request (currently 0, 1, 2 or 3 bits), and/or in the CSI request (currently 0, 1, 2, 3, 4, 5 or 6 bits). Correspondingly, the SRS request field of the DCI format 1_2 (for DL scheduling) could be used/configured to carry the needed information.

An advantage and technical effect of the examples described herein is the power saving due to less uplink activity. In some instances the UE may also stop/pause CSI downlink measurements and thus save further energy. In addition, due to the potential UE power saving, the uplink interference is also reduced if certain uplink transmissions are not performed. Further, the presented solutions have low signaling overhead as well as low ambiguity time compared e.g. to MAC CE.

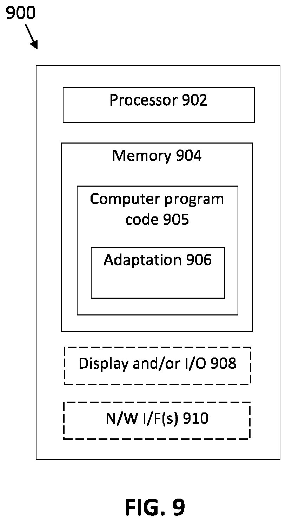

FIG. 9 is an example apparatus 900, which may be implemented in hardware, configured to implement adaptation of uplink activity, based on the examples described herein. The apparatus 900 comprises a processor 902, at least one non-transitory memory 904 including computer program code 905, where the at least one memory 904 and the computer program code 905 are configured to, with the at least one processor 902, cause the apparatus to implement circuitry, a process, component, module, or function (collectively adaptation 906) to implement adaptation of uplink activity. The apparatus 900 optionally includes a display and/or I/O interface 908 that may be used to display aspects or a status of the methods described herein (e.g., as one of the methods is being performed or at a subsequent time). The apparatus 900 includes one or more network (N/W) interfaces (I/F(s)) 910. The N/W I/F(s) 910 may be wired and/or wireless and communicate over the Internet/other network(s) via any communication technique. The N/W I/F(s) 910 may comprise one or more transmitters and one or more receivers.

The apparatus 900 may be UE 110, RAN node 170, or network element(s) 190. Thus, processor 902 may correspond respectively to processor(s) 120, processor(s) 152, or processor(s) 175, memory 904 may correspond respectively to memory(ies) 125, memory(ies) 155, or memory(ies) 171, computer program code 905 may correspond respectively to computer program code 123, module 140-1, module 140-2, computer program code 153, module 150-1, module 150-2, or computer program code 173, and N/W I/F(s) 910 may correspond respectively to N/W I/F(s) 161 or N/W I/F(s) 180. Alternatively, apparatus 900 may not correspond to either of UE 110, RAN node 170, or network element(s) 190 (for example, apparatus 900 may be a remote, virtual or cloud apparatus).

References to a 'computer', 'processor', etc. should be understood to encompass not only computers having different architectures such as single/multi-processor architectures and sequential (Von Neumann)/parallel architectures but also specialized circuits such as field-programmable gate arrays (FPGAs), application specific integrated circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memory(ies) as described herein may be implemented using any suitable data storage technology, such as semiconductor based memory devices, flash memory, magnetic memory devices and systems, optical memory devices and systems, fixed memory and removable memory. The memory(ies) may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

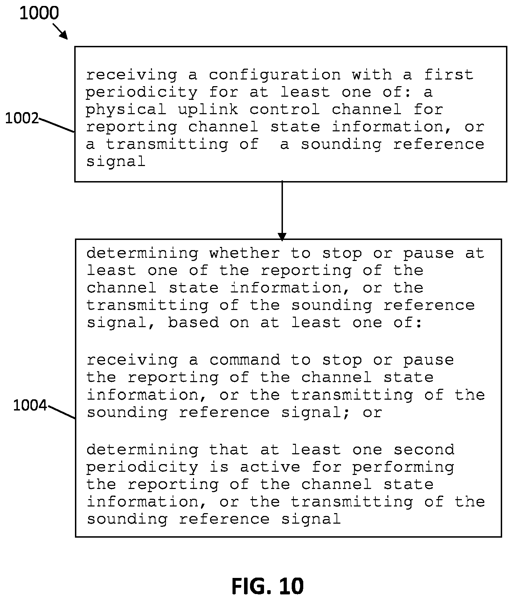

FIG. 10 is an example method 1000, based on the example embodiments described herein. At 1002, the method includes receiving a configuration with a first periodicity for at least one of: a physical uplink control channel for reporting channel state information, or a transmitting of a sounding reference signal. At 1004, the method includes determining whether to stop or pause at least one of the reporting of the channel state information, or the transmitting of the sounding reference signal, based on at least one of: receiving a command to stop or pause the reporting of the channel state information, or the transmitting of the sounding reference signal; or determining that at least one second periodicity is active for performing the reporting of the channel state information, or the transmitting of the sounding reference signal. The method 1000 may be performed by e.g. the UE 110 or apparatus 900.

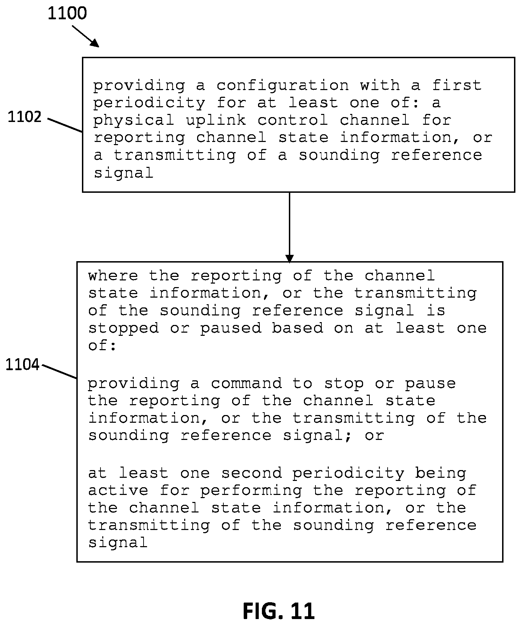

FIG. 11 is another example method 1100, based on the example embodiments described herein. At 1102, the method includes providing a configuration with a first periodicity for at least one of: a physical uplink control channel for reporting channel state information, or a transmitting of a sounding reference signal. At 1104, the method includes where the reporting of the channel state information, or the transmitting of the sounding reference signal is stopped or paused based on at least one of: providing a command to stop or pause the reporting of the channel state information, or the transmitting of the sounding reference signal; or at least one second periodicity being active for performing the reporting of the channel state information, or the transmitting of the sounding reference signal The method 1100 may be performed by e.g. the gNB 170 or apparatus 900.

An example method includes receiving a configuration with a first periodicity for at least one of: a physical uplink control channel for reporting channel state information, or a transmitting of a sounding reference signal; and determining whether to stop or pause at least one of the reporting of the channel state information, or the transmitting of the sounding reference signal, based on at least one of: receiving a command to stop or pause the reporting of the channel state information, or the transmitting of the sounding reference signal; or determining that at least one second periodicity is active for performing the reporting of the channel state information, or the transmitting of the sounding reference signal.

Other aspects of the method may include the following. The method may further include determining whether to stop or pause measuring of channel state information based on at least one of: receiving a command to stop or pause the measuring of the channel state information; or determining that the at least one second periodicity is active for performing the measuring of the channel state information. The command to stop or pause the channel state information reporting, channel state information measurement, or the sounding reference signal transmitting may comprise a command to skip monitoring of a downlink control channel. Whether to stop or pause the channel state information reporting, the channel state information measurement, or the sounding reference signal transmitting may depend further on a duration of the downlink control channel monitoring skipping. A time duration to stop or pause the channel state information reporting, channel state information measurement, or the sounding reference signal transmitting may be dependent on the duration of the downlink control channel monitoring skipping. The method may further include changing to the first periodicity or the second periodicity in response to not receiving information or a command over a physical downlink control channel for a predetermined amount of time. The method may further include determining that the at least one second periodicity is active based on the second periodicity being indicated by downlink control information. The at least one second periodicity may comprise an extended or prolonged period relative to a period of a previously active periodicity, to reduce a frequency of the reporting of the channel state information, the transmitting of the sounding reference signal, or the measuring of the channel state information. The method may further include determining that the first periodicity is active in response to receiving downlink control information scrambled with a cell radio network temporary identifier; and determining that the at least one second periodicity is active in response to not receiving the downlink control information scrambled with the cell radio network temporary identifier for a predetermined amount of time. The method may further include determining that the first periodicity is active in response to a first predefined search space group being active and/or indicated to be active; and determining that the at least one second periodicity is active in response to a second predefined search space group being active and/or indicated to be active. The method may further include determining that the first periodicity is active in response to a first predefined minimum scheduling offset restriction for uplink or downlink being active and/or indicated to be active; and determining that the at least one second periodicity is active in response to a second predefined minimum scheduling offset restriction for uplink or downlink being active and/or indicated to be active. The method may further include determining that the at least one second periodicity is active in response to a plurality of consecutive channel state information values based on the first periodicity being the same or within a predetermined variation. The method may further include reporting the channel state information irrespective of a currently used reporting periodicity while multiplexing channel state information together with a hybrid automatic repeat request acknowledgement based on the first periodicity. The method may further include, when using the at least one second periodicity, continuing to measure the channel state information based on the first periodicity and, in response to a value of the channel state information differing from a previously reported channel state information value, reporting the channel state information based on the first periodicity, otherwise reporting the channel state information based on the at least one second periodicity. The method may further include resuming the reporting of the channel state information, the transmitting of the sounding reference signal, or the measuring of the channel state information.

An example method includes providing a configuration with a first periodicity for at least one of: a physical uplink control channel for reporting channel state information, or a transmitting of a sounding reference signal; where the reporting of the channel state information, or the transmitting of the sounding reference signal is stopped or paused based on at least one of: providing a command to stop or pause the reporting of the channel state information, or the transmitting of the sounding reference signal; or at least one second periodicity being active for performing the reporting of the channel state information, or the transmitting of the sounding reference signal.

Other aspects of the method may include the following. Measuring of the channel state information may be stopped or paused based on at least one of: providing a command to stop or pause the measuring of the channel state information; or the at least one second periodicity being active for performing the measuring of the channel state information. The command to stop or pause the channel state information reporting, channel state information measurement, or the sounding reference signal transmitting may comprise a command to skip monitoring of a downlink control channel. Whether to stop or pause the channel state information reporting, the channel state information measurement, or the sounding reference signal transmitting may depend further on a duration of the downlink control channel monitoring skipping. A time duration to stop or pause the channel state information reporting, channel state information measurement, or the sounding reference signal transmitting may be dependent on the duration of the downlink control channel monitoring skipping. The method may further include not providing information or a command over a physical downlink control channel for a predetermined amount of time; where the first periodicity is changed to being active, or the second periodicity is changed to being active in response to the not providing of the information or the command over the physical downlink control channel for the predetermined amount of time. The method may further include providing downlink control information to activate the at least one second periodicity. The at least one second periodicity may comprise an extended or prolonged period relative to a period of a previously active periodicity, to reduce a frequency of the reporting of the channel state information, the transmitting of the sounding reference signal, or the measuring of the channel state information. The method may further include activating the first periodicity through providing downlink control information scrambled with a cell radio network temporary identifier; and activating the at least one second periodicity through not providing the downlink control information scrambled with the cell radio network temporary identifier for a predetermined amount of time. The method may further include activating the first periodicity through activation of a first predefined search space group; and activating the at least one second periodicity through activation of a second predefined search space group. The method may further include activating the first periodicity through activation of a first predefined minimum scheduling offset restriction for uplink or downlink; and activating the at least one second periodicity through activation of a second predefined minimum scheduling offset restriction for uplink or downlink. The at least one second periodicity may be active in response to detection failure for a plurality of consecutive channel state information reports based on the first periodicity. The method may further include receiving the channel state information irrespective of a currently used reporting periodicity when the channel state information is multiplexed together with a hybrid automatic repeat request acknowledgement based on the first periodicity. The method may further include, when the at least one second periodicity is used, receiving reporting of the channel state information based on the first periodicity, in response to a value of the channel state information differing from a previously reported channel state information value, otherwise receiving reporting of the channel state information based on the at least one second periodicity.

An example apparatus includes at least one processor; and at least one non-transitory memory including computer program code; where the at least one memory and the computer program code are configured to, with the at least one processor, cause the apparatus at least to perform: receive a configuration with a first periodicity for at least one of: a physical uplink control channel for reporting channel state information, or a transmitting of a sounding reference signal; and determine whether to stop or pause at least one of the reporting of the channel state information, or the transmitting of the sounding reference signal, based on at least one of: receiving a command to stop or pause the reporting of the channel state information, or the transmitting of the sounding reference signal; or determining that at least one second periodicity is active for performing the reporting of the channel state information, or the transmitting of the sounding reference signal.

Other aspects of the apparatus may include the following. The at least one memory and the computer program code may be further configured to, with the at least one processor, cause the apparatus at least to perform: determine whether to stop or pause measuring of channel state information based on at least one of: receiving a command to stop or pause the measuring of the channel state information; or determining that the at least one second periodicity is active for performing the measuring of the channel state information. The command to stop or pause the channel state information reporting, channel state information measurement, or the sounding reference signal transmitting may comprise a command to skip monitoring of a downlink control channel. Whether to stop or pause the channel state information reporting, the channel state information measurement, or the sounding reference signal transmitting may depend further on a duration of the downlink control channel monitoring skipping. A time duration to stop or pause the channel state information reporting, channel state information measurement, or the sounding reference signal transmitting may be dependent on the duration of the downlink control channel monitoring skipping. The at least one memory and the computer program code may be further configured to, with the at least one processor, cause the apparatus at least to perform: change to the first periodicity or the second periodicity in response to not receiving information or a command over a physical downlink control channel for a predetermined amount of time. The at least one memory and the computer program code may be further configured to, with the at least one processor, cause the apparatus at least to perform: determine that the at least one second periodicity is active based on the second periodicity being indicated by downlink control information. The at least one second periodicity may comprise an extended or prolonged period relative to a period of a previously active periodicity, to reduce a frequency of the reporting of the channel state information, the transmitting of the sounding reference signal, or the measuring of the channel state information. The at least one memory and the computer program code may be further configured to, with the at least one processor, cause the apparatus at least to perform: determine that the first periodicity is active in response to receiving downlink control information scrambled with a cell radio network temporary identifier; and determine that the at least one second periodicity is active in response to not receiving the downlink control information scrambled with the cell radio network temporary identifier for a predetermined amount of time. The at least one memory and the computer program code may be further configured to, with the at least one processor, cause the apparatus at least to perform: determine that the first periodicity is active in response to a first predefined search space group being active and/or indicated to be active; and determine that the at least one second periodicity is active in response to a second predefined search space group being active and/or indicated to be active. The at least one memory and the computer program code may be further configured to, with the at least one processor, cause the apparatus at least to perform: determine that the first periodicity is active in response to a first predefined minimum scheduling offset restriction for uplink or downlink being active and/or indicated to be active; and determine that the at least one second periodicity is active in response to a second predefined minimum scheduling offset restriction for uplink or downlink being active and/or indicated to be active. The at least one memory and the computer program code may be further configured to, with the at least one processor, cause the apparatus at least to perform: determine that the at least one second periodicity is active in response to a plurality of consecutive channel state information values based on the first periodicity being the same or within a predetermined variation. The at least one memory and the computer program code may be further configured to, with the at least one processor, cause the apparatus at least to perform: report the channel state information irrespective of a currently used reporting periodicity while multiplexing channel state information together with a hybrid automatic repeat request acknowledgement based on the first periodicity. The at least one memory and the computer program code may be further configured to, with the at least one processor, cause the apparatus at least to perform: when using the at least one second periodicity, continue to measure the channel state information based on the first periodicity and, in response to a value of the channel state information differing from a previously reported channel state information value, report the channel state information based on the first periodicity, otherwise report the channel state information based on the at least one second periodicity.

An example apparatus includes at least one processor; and at least one non-transitory memory including computer program code; where the at least one memory and the computer program code are configured to, with the at least one processor, cause the apparatus at least to perform: provide a configuration with a first periodicity for at least one of: a physical uplink control channel for reporting channel state information, or a transmitting of a sounding reference signal; where the reporting of the channel state information, or the transmitting of the sounding reference signal is stopped or paused based on at least one of: providing a command to stop or pause the reporting of the channel state information, or the transmitting of the sounding reference signal; or at least one second periodicity being active for performing the reporting of the channel state information, or the transmitting of the sounding reference signal.

Other aspects of the apparatus may include the following. Measuring of the channel state information may be stopped or paused based on at least one of: providing a command to stop or pause the measuring of the channel state information; or the at least one second periodicity being active for performing the measuring of the channel state information. The command to stop or pause the channel state information reporting, channel state information measurement, or the sounding reference signal transmitting may comprise a command to skip monitoring of a downlink control channel. Whether to stop or pause the channel state information reporting, the channel state information measurement, or the sounding reference signal transmitting may depend further on a duration of the downlink control channel monitoring skipping. A time duration to stop or pause the channel state information reporting, channel state information measurement, or the sounding reference signal transmitting may be dependent on the duration of the downlink control channel monitoring skipping. The at least one memory and the computer program code may be further configured to, with the at least one processor, cause the apparatus at least to perform: not provide information or a command over a physical downlink control channel for a predetermined amount of time; where the first periodicity is changed to being active, or the second periodicity is changed to being active in response to the not providing of the information or the command over the physical downlink control channel for the predetermined amount of time. The at least one memory and the computer program code may be further configured to, with the at least one processor, cause the apparatus at least to perform: provide downlink control information to activate the at least one second periodicity. The at least one second periodicity may comprise an extended or prolonged period relative to a period of a previously active periodicity, to reduce a frequency of the reporting of the channel state information, the transmitting of the sounding reference signal, or the measuring of the channel state information. The at least one memory and the computer program code may be further configured to, with the at least one processor, cause the apparatus at least to perform: activate the first periodicity through providing downlink control information scrambled with a cell radio network temporary identifier; and activate the at least one second periodicity through not providing the downlink control information scrambled with the cell radio network temporary identifier for a predetermined amount of time. The at least one memory and the computer program code may be further configured to, with the at least one processor, cause the apparatus at least to perform: activate the first periodicity through activation of a first predefined search space group; and activate the at least one second periodicity through activation of a second predefined search space group. The at least one memory and the computer program code may be further configured to, with the at least one processor, cause the apparatus at least to perform: activate the first periodicity through activation of a first predefined minimum scheduling offset restriction for uplink or downlink; and activate the at least one second periodicity through activation of a second predefined minimum scheduling offset restriction for uplink or downlink. The at least one second periodicity may be active in response to detection failure for a plurality of consecutive channel state information reports based on the first periodicity. The at least one memory and the computer program code may be further configured to, with the at least one processor, cause the apparatus at least to perform: receive the channel state information irrespective of a currently used reporting periodicity when the channel state information is multiplexed together with a hybrid automatic repeat request acknowledgement based on the first periodicity. The at least one memory and the computer program code may be further configured to, with the at least one processor, cause the apparatus at least to perform: when the at least one second periodicity is used, receive reporting of the channel state information based on the first periodicity, in response to a value of the channel state information differing from a previously reported channel state information value, otherwise receive reporting of the channel state information based on the at least one second periodicity.

An example apparatus includes means for receiving a configuration with a first periodicity for at least one of: a physical uplink control channel for reporting channel state information, or a transmitting of a sounding reference signal; and means for
determining whether to stop or pause at least one of the reporting of the channel state information, or the transmitting of the sounding reference signal, based on at least one of: receiving a command to stop or pause the reporting of the channel state information, or the transmitting of the sounding reference signal; or determining that at least one second periodicity is active for performing the reporting of the channel state information, or the transmitting of the sounding reference signal.

Other aspects of the apparatus may include the following. The apparatus may further include means for determining whether to stop or pause measuring of channel state information based on at least one of: receiving a command to stop or pause the measuring of the channel state information; or determining that the at least one second periodicity is active for performing the measuring of the channel state information. The command to stop or pause the channel state information reporting, channel state information measurement, or the sounding reference signal transmitting may comprise a command to skip monitoring of a downlink control channel. Whether to stop or pause the channel state information reporting, the channel state information measurement, or the sounding reference signal transmitting may depend further on a duration of the downlink control channel monitoring skipping. A time duration to stop or pause the channel state information reporting, channel state information measurement, or the sounding reference signal transmitting may be dependent on the duration of the downlink control channel monitoring skipping. The apparatus may further include means for changing to the first periodicity or the second periodicity in response to not receiving information or a command over a physical downlink control channel for a predetermined amount of time. The apparatus may further include means for determining that the at least one second periodicity is active based on the second periodicity being indicated by downlink control information. The at least one second periodicity may comprise an extended or prolonged period relative to a period of a previously active periodicity, to reduce a frequency of the reporting of the channel state information, the transmitting of the sounding reference signal, or the measuring of the channel state information. The apparatus may further include means for determining that the first periodicity is active in response to receiving downlink control information scrambled with a cell radio network temporary identifier; and means for determining that the at least one second periodicity is active in response to not receiving the downlink control information scrambled with the cell radio network temporary identifier for a predetermined amount of time. The apparatus may further include means for determining that the first periodicity is active in response to a first predefined search space group being active and/or indicated to be active; and means for determining that the at least one second periodicity is active in response to a second predefined search space group being active and/or indicated to be active. The apparatus may further include means for determining that the first periodicity is active in response to a first predefined minimum scheduling offset restriction for uplink or downlink being active and/or indicated to be active; and means for determining that the at least one second periodicity is active in response to a second predefined minimum scheduling offset restriction for uplink or downlink being active and/or indicated to be active. The apparatus may further include means for determining that the at least one second periodicity is active in response to a plurality of consecutive channel state information values based on the first periodicity being the same or within a predetermined variation. The apparatus may further include means for reporting the channel state information irrespective of a currently used reporting periodicity while multiplexing channel state information together with a hybrid automatic repeat request acknowledgement based on the first periodicity. The apparatus may further include, when using the at least one second periodicity, means for continuing to measure the channel state information based on the first periodicity and, in response to a value of the channel state information differing from a previously reported channel state information value, means for reporting the channel state information based on the first periodicity, otherwise means for reporting the channel state information based on the at least one second periodicity.

An example apparatus includes means for providing a configuration with a first periodicity for at least one of: a physical uplink control channel for reporting channel state information, or a transmitting of a sounding reference signal; where the reporting of the channel state information, or the transmitting of the sounding reference signal is stopped or paused based on at least one of: providing a command to stop or pause the reporting of the channel state information, or the transmitting of the sounding reference signal; or at least one second periodicity being active for performing the reporting of the channel state information, or the transmitting of the sounding reference signal.

Other aspects of the apparatus may include the following. The measuring of the channel state information may be stopped or paused based on at least one of: providing a command to stop or pause the measuring of the channel state information; or the at least one second periodicity being active for performing the measuring of the channel state information. The command to stop or pause the channel state information reporting, channel state information measurement, or the sounding reference signal transmitting may comprise a command to skip monitoring of a downlink control channel. Whether to stop or pause the channel state information reporting, the channel state information measurement, or the sounding reference signal transmitting may depend further on a duration of the downlink control channel monitoring skipping. A time duration to stop or pause the channel state information reporting, channel state information measurement, or the sounding reference signal transmitting may be dependent on the duration of the downlink control channel monitoring skipping. The apparatus may further comprise means for not providing information or a command over a physical downlink control channel for a predetermined amount of time; where the first periodicity is changed to being active, or the second periodicity is changed to being active in response to the not providing of the information or the command over the physical downlink control channel for the predetermined amount of time. The apparatus may further comprise means for providing downlink control information to activate the at least one second periodicity. The at least one second periodicity may comprise an extended or prolonged period relative to a period of a previously active periodicity, to reduce a frequency of the reporting of the channel state information, the transmitting of the sounding reference signal, or the measuring of the channel state information. The apparatus may further include means for activating the first periodicity through providing downlink control information scrambled with a cell radio network temporary identifier; and means for activating the at least one second periodicity through not providing the downlink control information scrambled with the cell radio network temporary identifier for a predetermined amount of time. The apparatus may further include means for activating the first periodicity through activation of a first predefined search space group; and means for activating the at least one second periodicity through activation of a second predefined search space group. The apparatus may further include means for activating the first periodicity through activation of a first predefined minimum scheduling offset restriction for uplink or downlink; and means for activating the at least one second periodicity through activation of a second predefined minimum scheduling offset restriction for uplink or downlink. The at least one second periodicity may be active in response to detection failure for a plurality of consecutive channel state information reports based on the first periodicity. The apparatus may further comprise means for receiving the channel state information irrespective of a currently used reporting periodicity when the channel state information is multiplexed together with a hybrid automatic repeat request acknowledgement based on the first periodicity. The apparatus may further include, when the at least one second periodicity is used, means for receiving reporting of the channel state information based on the first periodicity, in response to a value of the channel state information differing from a previously reported channel state information value, otherwise means for receiving reporting of the channel state information based on the at least one second periodicity.

An example non-transitory program storage device readable by a machine, tangibly embodying a program of instructions executable by the machine for performing operations may be provided, the operations including: receiving a configuration with a first periodicity for at least one of: a physical uplink control channel for reporting channel state information, or a transmitting of a sounding reference signal; and determining whether to stop or pause at least one of the reporting of the channel state information, or the transmitting of the sounding reference signal, based on at least one of: receiving a command to stop or pause the reporting of the channel state information, or the transmitting of the sounding reference signal; or determining that at least one second periodicity is active for performing the reporting of the channel state information, or the transmitting of the sounding reference signal.

Other aspects of the non-transitory program storage device may include the following. The operations of the non-transitory program storage device may further include determining whether to stop or pause measuring of channel state information based on at least one of: receiving a command to stop or pause the measuring of the channel state information; or determining that the at least one second periodicity is active for performing the measuring of the channel state information. The command to stop or pause the channel state information reporting, channel state information measurement, or the sounding reference signal transmitting may comprise a command to skip monitoring of a downlink control channel. Whether to stop or pause the channel state information reporting, the channel state information measurement, or the sounding reference signal transmitting may depend further on a duration of the downlink control channel monitoring skipping. A time duration to stop or pause the channel state information reporting, channel state information measurement, or the sounding reference signal transmitting may be dependent on the duration of the downlink control channel monitoring skipping. The operations of the non-transitory program storage device may further include changing to the first periodicity or the second periodicity in response to not receiving information or a command over a physical downlink control channel for a predetermined amount of time. The operations of the non-transitory program storage device may further include determining that the at least one second periodicity is active based on the second periodicity being indicated by downlink control information. The at least one second periodicity may comprise an extended or prolonged period relative to a period of a previously active periodicity, to reduce a frequency of the reporting of the channel state information, the transmitting of the sounding reference signal, or the measuring of the channel state information. The operations of the non-transitory program storage device may further include determining that the first periodicity is active in response to receiving downlink control information scrambled with a cell radio network temporary identifier; and determining that the at least one second periodicity is active in response to not receiving the downlink control information scrambled with the cell radio network temporary identifier for a predetermined amount of time. The operations of the non-transitory program storage device may further include determining that the first periodicity is active in response to a first predefined search space group being active and/or indicated to be active; and determining that the at least one second periodicity is active in response to a second predefined search space group being active and/or indicated to be active. The operations of the non-transitory program storage device may further include determining that the first periodicity is active in response to a first predefined minimum scheduling offset restriction for uplink or downlink being active and/or indicated to be active; and determining that the at least one second periodicity is active in response to a second predefined minimum scheduling offset restriction for uplink or downlink being active and/or indicated to be active. The operations of the non-transitory program storage device may further include determining that the at least one second periodicity is active in response to a plurality of consecutive channel state information values based on the first periodicity being the same or within a predetermined variation. The operations of the non-transitory program storage device may further include reporting the channel state information irrespective of a currently used reporting periodicity while multiplexing channel state information together with a hybrid automatic repeat request acknowledgement based on the first periodicity. The operations of the non-transitory program storage device may further include, when using the at least one second periodicity, continuing to measure the channel state information based on the first periodicity and, in response to a value of the channel state information differing from a previously reported channel state information value, reporting the channel state information based on the first periodicity, otherwise reporting the channel state information based on the at least one second periodicity.

An example non-transitory program storage device readable by a machine, tangibly embodying a program of instructions executable by the machine for performing operations may be provided, the operations including providing a configuration with a first periodicity for at least one of: a physical uplink control channel for reporting channel state information, or a transmitting of a sounding reference signal; where the reporting of the channel state information, or the transmitting of the sounding reference signal is stopped or paused based on at least one of: providing a command to stop or pause the reporting of the channel state information, or the transmitting of the sounding reference signal; or at least one second periodicity being active for performing the reporting of the channel state information, or the transmitting of the sounding reference signal.

Other aspects of the non-transitory program storage device may include the following. Measuring of the channel state information may be stopped or paused based on at least one of: providing a command to stop or pause the measuring of the channel state information; or the at least one second periodicity being active for performing the measuring of the channel state information. The command to stop or pause the channel state information reporting, channel state information measurement, or the sounding reference signal transmitting may comprise a command to skip monitoring of a downlink control channel. Whether to stop or pause the channel state information reporting, the channel state information measurement, or the sounding reference signal transmitting may depend further on a duration of the downlink control channel monitoring skipping. A time duration to stop or pause the channel state information reporting, channel state information measurement, or the sounding reference signal transmitting may be dependent on the duration of the downlink control channel monitoring skipping. The operations of the non-transitory program storage device may further include not providing information or a command over a physical downlink control channel for a predetermined amount of time; where the first periodicity is changed to being active, or the second periodicity is changed to being active in response to the not providing of the information or the command over the physical downlink control channel for the predetermined amount of time. The operations of the non-transitory program storage device may further include providing downlink control information to activate the at least one second periodicity. The at least one second periodicity may comprise an extended or prolonged period relative to a period of a previously active periodicity, to reduce a frequency of the reporting of the channel state information, the transmitting of the sounding reference signal, or the measuring of the channel state information. The operations of the non-transitory program storage device may further include activating the first periodicity through providing downlink control information scrambled with a cell radio network temporary identifier; and activating the at least one second periodicity through not providing the downlink control information scrambled with the cell radio network temporary identifier for a predetermined amount of time. The operations of the non-transitory program storage device may further include activating the first periodicity through activation of a first predefined search space group; and activating the at least one second periodicity through activation of a second predefined search space group. The operations of the non-transitory program storage device may further include activating the first periodicity through activation of a first predefined minimum scheduling offset restriction for uplink or downlink; and activating the at least one second periodicity through activation of a second predefined minimum scheduling offset restriction for uplink or downlink. The at least one second periodicity may be active in response to detection failure for a plurality of consecutive channel state information reports based on the first periodicity. The operations of the non-transitory program storage device may further include receiving the channel state information irrespective of a currently used reporting periodicity when the channel state information is multiplexed together with a hybrid automatic repeat request acknowledgement based on the first periodicity. The operations of the non-transitory program storage device may further include, when the at least one second periodicity is used, receiving reporting of the channel state information based on the first periodicity, in response to a value of the channel state information differing from a previously reported channel state information value, otherwise receiving reporting of the channel state information based on the at least one second periodicity.

An example apparatus may include one or more circuitries configured to implement any of the methods described herein performed by a UE, including receiving a configuration with a first periodicity for at least one of: a physical uplink control channel for reporting channel state information, or a transmitting of a sounding reference signal; and determining whether to stop or pause at least one of the reporting of the channel state information, or the transmitting of the sounding reference signal, based on at least one of: receiving a command to stop or pause the reporting of the channel state information, or the transmitting of the sounding reference signal; or determining that at least one second periodicity is active for performing the reporting of the channel state information, or the transmitting of the sounding reference signal.

An example apparatus may include one or more circuitries configured to implement any of the methods described herein performed by a network (e.g. a gNB), including providing a configuration with a first periodicity for at least one of: a physical uplink control channel for reporting channel state information, or a transmitting of a sounding reference signal; where the reporting of the channel state information, or the transmitting of the sounding reference signal is stopped or paused based on at least one of: providing a command to stop or pause the reporting of the channel state information, or the transmitting of the sounding reference signal; or at least one second periodicity being active for performing the reporting of the channel state information, or the transmitting of the sounding reference signal.

It should be understood that the foregoing description is only illustrative. Various alternatives and modifications may be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modifications and variances which fall within the scope of the appended claims.

## Claims

1. An apparatus (110) comprising:
means for receiving (132) a configuration with a first periodicity for at least one of: a physical uplink control channel for reporting channel state information, or a transmitting of a sounding reference signal;
means for determining that at least one second periodicity is active in response to a plurality of consecutive channel state information values based on the first periodicity being the same or within a predetermined variation; and
means for determining (140) whether to stop or pause at least one of the reporting of the channel state information, or the transmitting of the sounding reference signal, based on
receiving a command to stop or pause the reporting of the channel state information, or the transmitting of the sounding reference signal; and
based on the determining that the at least one second periodicity is active for performing the reporting of the channel state information, or the transmitting of the sounding reference signal, wherein the at least one second periodicity is longer than the first periodicity.

2. The apparatus of claim 1, further comprising:
means for determining whether to stop or pause measuring of channel state information based on at least one of:
receiving a command to stop or pause the measuring of the channel state information; or
determining that the at least one second periodicity is active for performing the measuring of the channel state information.

3. The apparatus of claim 1, where the command to stop or pause the channel state information reporting, or the sounding reference signal transmitting comprises a command to skip monitoring of a downlink control channel.

4. The apparatus of claim 3, where whether to stop or pause the channel state information reporting, or the sounding reference signal transmitting depends further on a duration of the downlink control channel monitoring skipping.

5. The apparatus of claim 4, where a time duration to stop or pause the channel state information reporting, or the sounding reference signal transmitting is dependent on the duration of the downlink control channel monitoring skipping.

6. The apparatus of any of claims 1 to 5, further comprising:
means for changing to the first periodicity or the second periodicity in response to not receiving information or a command over a physical downlink control channel for a predetermined amount of time.

7. The apparatus of any of claims 1 to 6, further comprising:
means for determining that the at least one second periodicity is active based on the second periodicity being indicated by downlink control information.

8. The apparatus of any of claims 1 to 7, where the at least one second periodicity comprises an extended or prolonged period relative to a period of a previously active periodicity.

9. The apparatus of any of claims 1 to 8, further comprising:
means for determining that the first periodicity is active in response to receiving downlink control information scrambled with a cell radio network temporary identifier; and
means for determining that the at least one second periodicity is active in response to not receiving the downlink control information scrambled with the cell radio network temporary identifier for a predetermined amount of time.

10. The apparatus of any of claims 1 to 9, further comprising:
means for determining that the first periodicity is active in response to a first predefined search space group being active and/or indicated to be active; and
means for determining that the at least one second periodicity is active in response to a second predefined search space group being active and/or indicated to be active.

11. The apparatus of any of claims 1 to 10, further comprising:
means for determining that the first periodicity is active in response to a first predefined minimum scheduling offset restriction for uplink or downlink being active and/or indicated to be active; and
means for determining that the at least one second periodicity is active in response to a second predefined minimum scheduling offset restriction for uplink or downlink being active and/or indicated to be active.

12. The apparatus of any of claims 1 to 11, further comprising:
means for reporting the channel state information irrespective of a currently used reporting periodicity while multiplexing channel state information together with a hybrid automatic repeat request acknowledgement based on the first periodicity.

13. The apparatus of claim 2, further comprising:
when using the at least one second periodicity, means for continuing to measure the channel state information based on the first periodicity and, in response to a value of the channel state information differing from a previously reported channel state information value, means for reporting the channel state information based on the first periodicity, otherwise means for reporting the channel state information based on the at least one second periodicity.

14. A system comprising a first apparatus (170) comprising:
means for providing a configuration with a first periodicity for at least one of: a physical uplink control channel for reporting channel state information, or a transmitting of a sounding reference signal;
where the reporting of the channel state information, or the transmitting of the sounding reference signal is stopped or paused based on at least one of:
providing a command to stop or pause the reporting of the channel state information, or the transmitting of the sounding reference signal; or
at least one second periodicity being active for performing the reporting of the channel state information, or the transmitting of the sounding reference signal; and
a second apparatus (110) comprising an apparatus according to any one of claims 1 to 13.

## Patentansprüche

1. Einrichtung (110), die Folgendes umfasst:
Mittel zum Empfangen (132) einer Auslegung mit einer ersten Periodizität für mindestens eines von Folgendem: einem physischen Uplinksteuerkanal zum Melden von Kanalzustandsinformationen oder einem Übertragen eines Sondierungsreferenzsignals;
Mittel zum Bestimmen, dass mindestens eine zweite Periodizität in Reaktion darauf aktiv ist, dass eine Vielzahl von aufeinanderfolgenden Kanalzustandsinformationswerten auf Basis der ersten Periodizität dieselben sind oder innerhalb einer vorbestimmten Variation liegen; und
Mittel zum Bestimmen (140), ob auf Basis des Empfangens eines Befehls zum Beenden oder Unterbrechen des Meldens der Kanalzustandsinformationen oder des Übertragens des Sondierungsreferenzsignals mindestens eines des Meldens der Kanalzustandsinformationen oder des Übertragens des Sondierungsreferenzsignals beendet oder unterbrochen werden soll; und
auf Basis des Bestimmens, dass die mindestens eine zweite Periodizität zum Durchführen des Meldens der Kanalzustandsinformationen oder des Übertragens des Sondierungsreferenzsignals aktiv ist, wobei die mindestens eine zweite Periodizität länger ist als die erste Periodizität.

2. Einrichtung nach Anspruch 1, die ferner Folgendes umfasst:
Mittel zum Bestimmen, ob auf Basis von mindestens einem von Folgendem ein Messen von Kanalzustandsinformationen beendet oder unterbrochen werden soll:
Empfangen eines Befehls zum Beenden oder Unterbrechen des Messens der Kanalzustandsinformationen; oder
Bestimmen, dass die mindestens eine zweite Periodizität zum Durchführen des Messens der Kanalzustandsinformationen aktiv ist.

3. Einrichtung nach Anspruch 1, wo der Befehl zum Beenden oder Unterbrechen des Meldens der Kanalzustandsinformationen oder des Übertragens des Sondierungsreferenzsignals einen Befehl zum Überspringen des Überwachens eines Downlinksteuerkanals umfasst.

4. Einrichtung nach Anspruch 3, wo, ob das Melden der Kanalzustandsinformationen oder das Übertragen des Sondierungsreferenzsignals beendet oder unterbrochen werden soll, ferner von einer Dauer des Überspringens des Überwachens des Downlinksteuerkanals abhängig ist.

5. Einrichtung nach Anspruch 4, wo eine Zeitdauer zum Beenden oder Unterbrechen des Meldens der Kanalzustandsinformationen oder des Übertragens des Sondierungsreferenzsignals von der Dauer des Überspringens des Überwachens des Downlinksteuerkanals abhängig ist.

6. Einrichtung nach einem der Ansprüche 1 bis 5, die ferner Folgendes umfasst:
Mittel zum Wechseln zur ersten Periodizität oder zur zweiten Periodizität in Reaktion darauf, dass über einen physischen Downlinksteuerkanal für eine vorbestimmte Zeitmenge keine Informationen oder kein Befehl empfangen wird.

7. Einrichtung nach einem der Ansprüche 1 bis 6, die ferner Folgendes umfasst:
Mittel zum Bestimmen, dass die mindestens eine zweite Periodizität aktiv ist, darauf basierend, dass die zweite Periodizität von Downlinksteuerinformationen angezeigt wird.

8. Einrichtung nach einem der Ansprüche 1 bis 7, wo die mindestens eine zweite Periodizität relativ zu einer Periode einer zuvor aktiven Periodizität eine erweiterte oder verlängerte Periode umfasst.

9. Einrichtung nach einem der Ansprüche 1 bis 8, die ferner Folgendes umfasst:
Mittel zum Bestimmen in Reaktion auf das Empfangen von Downlinksteuerinformationen, die mit einer temporären Zellfunknetzwerkkennung gescrambelt sind, dass die erste Periodizität aktiv ist; und
Mittel zum Bestimmen in Reaktion darauf, dass die Downlinksteuerinformationen, die mit der temporären Zellfunknetzwerkkennung gescrambelt sind, für eine vorbestimmte Zeitmenge nicht empfangen werden, dass die mindestens eine zweite Periodizität aktiv ist.

10. Einrichtung nach einem der Ansprüche 1 bis 9, die ferner Folgendes umfasst:
Mittel zum Bestimmen in Reaktion darauf, dass eine erste vordefinierte Suchraumgruppe aktiv ist und/oder deren Aktivität angezeigt wird, dass die erste Periodizität aktiv ist; und
Mittel zum Bestimmen in Reaktion darauf, dass eine zweite vordefinierte Suchraumgruppe aktiv ist und/oder deren Aktivität angezeigt wird, dass die mindestens eine zweite Periodizität aktiv ist.

11. Einrichtung nach einem der Ansprüche 1 bis 10, die ferner Folgendes umfasst:
Mittel zum Bestimmen in Reaktion darauf, dass eine erste vordefinierte minimale Planungsversatzeinschränkung für Uplink oder Downlink aktiv ist und/oder deren Aktivität angezeigt wird, dass die erste Periodizität aktiv ist; und
Mittel zum Bestimmen in Reaktion darauf, dass eine zweite vordefinierte minimale Planungsversatzeinschränkung für Uplink oder Downlink aktiv ist und/oder deren Aktivität angezeigt wird, dass die mindestens eine zweite Periodizität aktiv ist.

12. Einrichtung nach einem der Ansprüche 1 bis 11, die ferner Folgendes umfasst:
Mittel zum Melden der Kanalzustandsinformationen unabhängig von einer derzeit verwendeten Meldeperiodizität, während Kanalzustandsinformationen zusammen mit einer hybriden automatischen Wiederholungsanforderungsbestätigung auf Basis der ersten Periodizität gemultiplext werden.

13. Einrichtung nach Anspruch 2, die ferner Folgendes umfasst:
wenn die mindestens eine zweite Periodizität verwendet wird, Mittel zum Fortsetzen des Messens der Kanalzustandsinformationen auf Basis der ersten Periodizität und in Reaktion darauf, dass sich ein Wert der Kanalzustandsinformationen von einem zuvor gemeldeten Kanalzustandsinformationswert unterscheidet, Mittel zum Melden der Kanalzustandsinformationen auf Basis der ersten Periodizität, andernfalls Mittel zum Melden der Kanalzustandsinformationen auf Basis der mindestens einen zweiten Periodizität.

14. System, das eine erste Einrichtung (170) umfasst, das Folgendes umfasst:
Mittel zum Bereitstellen einer Auslegung mit einer ersten Periodizität für mindestens eines von Folgendem: einem physischen Uplinksteuerkanal zum Melden von Kanalzustandsinformationen oder einem Übertragen eines Sondierungsreferenzsignals;
wo das Melden der Kanalzustandsinformationen oder das Übertragen des Sondierungsreferenzsignals auf Basis von mindestens einem von Folgendem beendet oder unterbrochen wird:
Bereitstellen eines Befehls zum Beenden oder Unterbrechen des Meldens der Kanalzustandsinformationen oder des Übertragens des Sondierungsreferenzsignals; oder
mindestens einer zweiten Periodizität, die zum Durchführen des Meldens der Kanalzustandsinformationen oder zum Übertragen des Sondierungsreferenzsignals aktiv ist; und
einer zweiten Einrichtung (110), die eine Einrichtung nach einem der Ansprüche 1 bis 13 umfasst.

## Revendications

1. Appareil (110) comprenant :
des moyens pour recevoir (132) une configuration avec une première périodicité pour au moins un parmi : un canal physique de contrôle de liaison montante pour rapporter des informations d'état de canal, ou une transmission d'un signal de référence de sondage ;
des moyens pour déterminer qu'au moins une deuxième périodicité est active en réponse à une pluralité de valeurs d'informations d'état de canal consécutives sur la base du fait que la première périodicité est la même ou qu'elle se trouve dans une variation prédéterminée ; et
des moyens pour déterminer (140) s'il faut arrêter ou mettre en pause au moins un parmi le rapport des informations d'état de canal ou la transmission du signal de référence de sondage
sur la base de la réception d'une commande d'arrêt ou de mise en pause du rapport des informations d'état de canal, ou de la transmission du signal de référence de sondage ; et
sur la base de la détermination du fait que l'au moins une deuxième périodicité est active pour effectuer le rapport des informations d'état de canal, ou de la transmission du signal de référence de sondage, dans lequel l'au moins une deuxième périodicité est plus longue que la première périodicité.

2. Appareil selon la revendication 1, comprenant en outre :
des moyens pour déterminer s'il faut arrêter ou mettre en pause la mesure d'informations d'état de canal sur la base d'au moins une parmi :
la réception d'une commande d'arrêt ou de mise en pause de la mesure des informations d'état de canal ; ou
la détermination du fait que l'au moins une deuxième périodicité est active pour effectuer la mesure des informations d'état de canal.

3. Appareil selon la revendication 1, où la commande d'arrêt ou de mise en pause du rapport d'informations d'état de canal ou la transmission de signal de référence de sondage comprend une commande d'ignorer la surveillance d'un canal de contrôle de liaison descendante.

4. Appareil selon la revendication 3, où la nécessité ou non d'arrêter ou de mettre en pause le rapport d'informations d'état de canal ou la transmission de signal de référence de sondage dépend en outre d'une durée de l'omission de la surveillance du canal de contrôle de liaison descendante.

5. Appareil selon la revendication 4, où une durée temporelle d'arrêt ou de mise en pause du rapport d'informations d'état de canal ou la transmission de signal de référence de sondage dépend de la durée de l'omission de la surveillance du canal de contrôle de liaison descendante.

6. Appareil selon l'une des revendications 1 à 5, comprenant en outre :
des moyens pour passer à la première périodicité ou à la deuxième périodicité en réponse à la non-réception d'informations ou d'une commande sur un canal physique de contrôle de liaison descendante dans un délai prédéterminé.

7. Appareil selon l'une des revendications 1 à 6, comprenant en outre :
des moyens pour déterminer que l'au moins une deuxième périodicité est active sur la base de la deuxième périodicité qui est indiquée par les informations de contrôle de liaison descendante.

8. Appareil selon l'une des revendications 1 à 7, où l'au moins une deuxième périodicité comprend une période étendue ou prolongée par rapport à une période d'une périodicité précédemment active.

9. Appareil selon l'une des revendications 1 à 8, comprenant en outre :
des moyens pour déterminer que la première périodicité est active en réponse à la réception d'informations de contrôle de liaison descendante brouillées avec un identifiant temporaire de réseau radio cellulaire ; et
des moyens pour déterminer que l'au moins une deuxième périodicité est active en réponse à la non réception des informations de contrôle de liaison descendante brouillées avec l'identifiant identifiant temporaire de réseau radio cellulaire dans un délai prédéterminé.

10. Appareil selon l'une des revendications 1 à 9, comprenant en outre :
des moyens pour déterminer que la première périodicité est active en réponse au fait qu'un premier groupe d'espace de recherche prédéfini est actif et/ou indiqué comme étant actif ; et
des moyens pour déterminer que l'au moins une deuxième périodicité est active en réponse au fait qu'un deuxième groupe d'espace de recherche prédéfini est actif et/ou indiqué comme étant actif.

11. Appareil selon l'une des revendications 1 à 10, comprenant en outre :
des moyens pour déterminer que la première périodicité est active en réponse au fait qu'une première restriction de décalage d'ordonnancement prédéfinie pour la liaison montante ou la liaison descendante est active et/ou indiquée comme étant active ; et
des moyens pour déterminer que l'au moins une deuxième périodicité est active en réponse au fait qu'une deuxième restriction de décalage d'ordonnancement prédéfinie pour la liaison montante ou la liaison descendante est active et/ou indiquée comme étant active.

12. Appareil selon l'une des revendications 1 à 11, comprenant en outre :
des moyens pour rapporter les informations d'état de canal indépendamment d'une périodicité de rapport actuellement utilisée tout en multiplexant les informations d'état de canal avec un accusé de réception de demande de répétition automatique hybride sur la base de la première périodicité.

13. Appareil selon la revendication 2, comprenant en outre :
lors de l'utilisation de l'au moins une deuxième périodicité, des moyens pour continuer à mesurer les informations d'état de canal sur la base de la première périodicité et, en réponse à une valeur des informations d'état de canal différente d'une valeur d'informations d'état de canal rapportée précédemment, des moyens pour rapporter les informations d'état de canal sur la base de la première périodicité, sinon des moyens pour rapporter les informations d'état de canal sur la base de l'au moins une deuxième périodicité.

14. Système comprenant un premier appareil (170) comprenant :
des moyens pour fournir une configuration avec une première périodicité pour au moins un parmi : un canal physique de contrôle de liaison montante pour rapporter des informations d'état de canal, ou une transmission d'un signal de référence de sondage ;
où le rapport des informations d'état de canal ou la transmission du signal de référence de sondage est arrêté(e) ou interrompu(e) sur la base d'au moins l'un parmi :
le fait de fournir une commande d'arrêt ou de mise en pause du rapport des informations d'état de canal, ou la transmission du signal de référence de sondage ; ou
le fait qu'au moins une deuxième périodicité est active pour effectuer le rapport des informations d'état de canal, ou la transmission du signal de référence de sondage ; et
un deuxième appareil (110) comprenant un appareil selon l'une des revendications 1 à 13.
